## Europäisches Patentamt
## European Patent Office
## Office européen des brevets

(19)

(11) Veröffentlichungsnummer: **0 105 074**
**B1**

(12) **EUROPÄISCHE PATENTSCHRIFT**

(51) Int. Cl.⁴: **D 06 N 3/00**, E 04 F 13/16, D 06 N 7/00, B 32 B 25/00, B 32 B 31/20

(45) Veröffentlichungstag der Patentschrift:
**27.04.88**

(21) Anmeldenummer: **83102254.6**

(22) Anmeldetag: **08.03.83**

(54) Verfahren zur Herstellung eines mehrfarbigen Fussbodenbelages.

(30) Priorität: **09.09.82 DE 3233448**

(43) Veröffentlichungstag der Anmeldung:
**11.04.84 Patentblatt 84/15**

(45) Bekanntmachung des Hinweises auf die Patenterteilung:
**27.04.88 Patentblatt 88/17**

(84) Benannte Vertragsstaaten:
**AT BE CH DE FR GB IT LI LU NL SE**

(56) Entgegenhaltungen:
**BE-A-737 132**
**DE-A-2 103 262**
**FR-A-2 146 808**
**GB-A-127 536**
**GB-A-380 456**

(73) Patentinhaber: **Firma Carl Freudenberg, Höhnerweg 4, D-6940 Weinheim/Bergstrasse (DE)**

(72) Erfinder: **Heckel, Klaus, Dr., Akazienweg 26, D-6940 Weinheim (DE)**
Erfinder: **Graab, Gerhard, Dr., Laurentiusstrasse 7, D-6800 Mannheim (DE)**
Erfinder: **Kühl, Hans- Michael, Tilsiter Strasse 34, D-6944 Hemsbach (DE)**

(74) Vertreter: **Weissenfeld- Richters, Helga, Dr., Höhnerweg 2, D-6940 Weinheim/Bergstrasse (DE)**

EP 0 105 074 B1

## Beschreibung

Die Erfindung betrifft ein Verfahren zur Herstellung eines zwei übereinander angeordnete Schichten aus kontrastfarbenem Gummi aufweisenden Fußbodenbelages, bei dem die Schichten gemeinsam verpreßt und durch Vulkanisierung des sie bildenden Werkstoffes verbunden und verfestigt werden und bei dem die Oberschicht zur Freilegung der Unterschicht in musterartig verteilten Flächenbereichen entfernt wird.

Ein solches Verfahren wird in DE-A-2 103 262 beschrieben. Dabei wird auf die Unterschicht eine zunächst kontinuierlich ausgebildete Oberschicht aufgelegt und durch die Einwirkung der Schließkraft während des Verpressens gemeinsam mit dieser in kegelstumpfförmige Vertiefungen der Pressenplatten ausgestülpt. Die Ausstülpungen bilden Erbungen auf der Oberfläche des Fußbodenbelages. Sie ermöglichen es, die Oberschicht durch eine gezielte mechanische Bearbeitung jeweils vollständig zu entfernen, wodurch die kontrastfarbene Unterschicht sichtbar wird. Eine noch weitergehende mechanische Bearbeitung führt zu einer von Erhebungen freien, zweifarbigen Oberfläche, die jedoch Bearbeitungsspuren im Bereich der ursprünglichen Ausstülpungen aufweist. Der Bodenbelag neigt dadurch hier stärker zum Verschmutzen als in den übrigen Bereichen.

Bei einer Ausfürung, bei der die Oberschicht und die Unterschicht aus eine polymeren Werkstoff bestehen, beipielsweise aus Gummi, weisen die nicht bearbeiteten Flächenbereiche im Gegensatz zu den bearbeiteten Flächenbereichen eine sogenante Press- oder Vulkanisationshaut auf und dadurch eine abweichende Abriebbeständigkeit, die bei eintretende Verschleiß zur Ausbildung nicht erwünschter Unegalitäten führt.

Die farbliche und die reliefartige Strukturierung der Oberfläche eines Fußbodenblages dieser Art entsprechen verfahrensbedingt einander vollständig. Das ist insofern nicht befriedigend, als architektonische Gesichtspunkte häufig eine von einander unabhängige Auslegung erfordern, beispielsweise, wenn die Oberfläche des Fußbodenbelages ohne Beeinträchtigung der Rutschsicherheit oder der Befarbarkeit im Hinblick auf eine Verwendung als Werbeträger in vorgegebener Weise farbig gemustert werden soll.

Aus der GB-A-127 536 ist ein Verfahren zur Herstellung eines zweischichtigen Fußbodenbelages bekannt, bei dem eine formbeständige Unterschicht in einem ersten Arbeitsvorgang mit einer Perforierung versehen und anschließend mit einer Oberschicht aus formbarem Werkstoff verpreßt wird. Die Verpressung wird dabei so vorgenommen, daß die durch die Perforierung gebildeten Aussparungen der Unterschicht mit dem Werkstoff der Oberschicht ganz ausgefüllt werden. Hierdurch ergeben sich im Bereich der Unterseite nebeneinanderliegende Oberflächenzonen, die einerseits dem die Oberschicht bildenden Werkstoffkörper und andererseits dem die Unterschicht bildenden Werkstoffkörper angehören. Beide sind artverschieden voneinander, was bei eintretendem Verschleiß zur Ausbildung von Unegalitäten führen würde. Neben einer Beeinträchtigung der Rutschsicherheit kann sich dadurch eine Beeinträchtigung des Aussehens ergeben. Hierauf kommt es jedoch im Rahmen der GB-A-127 536 nicht an, weil die Unterschicht stets dem tragenden Untergrund zugewandt und nicht sichtbar ist. Das Aussehen des Fußbodenbelages wird demgegenüber in allen Teilbereichen durch die Einfarbigkeit des die Oberschicht bildenden Werkstoffkörpers bestimmt.

Der Erfindung liegt demzufolge die Aufgabe zugrunde, ein Verfahren der eingangs genannten Art derart weiterzuentwickeln, daß die angesprochenen Nachteile vermieden werden. Das Verfahren soll es bei guter Wirtschaftlichkeit insbesondere ermöglichen, die reliefartige und die farbliche Musterung der Oberflächenstruktur frei zu wählen. Daneben soll es das vorgeschlagene Verfahren ermöglichen, auf der Oberfläche eine Press- bzw. Vulkanisationshaut zu erzeugen, die die aus verschiedenfarbigem Gummi bestehenden Bereiche unabhängig von der jeweiligen farblichen Musterung als kontinuierlich ausgebildete Schicht abschließt.

Diese Aufgabe wird erfindungsgemäß mit den kennzeichnenden Merkmalen des Patentanspruche gelöst.

Bei dem vorgeschlagenen Verfahren werden in einem ersten Arbeitsschritt zunächst die beiden Schichten hergestellt. Die untere Schicht besteht aus einem unter den Bedingungen des Verpressens plastisch formbaren, unvernetzten Gummi. Ihre Dicke entspricht wenigstens derjenigen der Oberschicht. Vorzugsweise ist die Dicke jedoch größer, um eine zusätzliche, allgemeine Aussteifung zu erhalten, und beträgt beispielsweise das zwei- bis dreifache derjenigen der Oberschicht.

Die Oberschicht besteht aus einem kontrastfarbenen Gummi, das vorausgehend anvulkanisiert worden ist und sich in einem weiter fortgeschrittenen Vernetzungszustand befindet als der Werkstoff der Unterschicht. Die Fließviskosität des die Oberschicht bildenden Werkstoffes ist daher während des Verpressens und der Vulkanisierung stets größer als die Fließviskosität des gleichzeitig erweichenden Werkstoffes der Unterschicht.

Hierdurch wird eine gute Konturenschärfe zwischen den verschiedenfarbigen Bereichen erhalten. Die angesprochen Fließviskosität wird bei gummielastischen Werkstoffen als mooney-Viskosität bezeichnet.

Die als Durchbrechungen ausgebildeten Aussparungen der Oberschicht können auf jede beliebige Weise angebracht werden, beispielsweise durch Stanzen, Schneiden oder Bohren. Dabei ist im Hinblick auf eine gute Konturenschärfe der farblichen Musterung größter Wert darauf zu legen, daß die bei einer solchen mechanischen Bearbeitung entstehenden Grate und andere lose Bestandteile sorgfältig entfernt werden. Zweckmäßigerweise wird die Oberschicht außerdem so auf die Unterschicht aufgelegt, daß die Gratseite dieser zugewandt ist. Nicht erkannte Restbestandteile von Graten haben hierdurch einen größeren Abstand von der eigentlichen Nutzfläche, und sind dadurch im fertigen Bodenbelag nicht unmittelbar sichtbar.

Die Begrenzungsflächen der Aussparungen sind den Deckflächen der Oberschicht senkrecht zugeordnet, um eine Veränderung des farblichen Gesamteindrucks nach eingetretenem Verschleiß auszuschließen. Das Profil als solches ist frei wählbar, und kann jede beliebige Gestalt haben, soweit nicht die Eigenfestigkeit der Oberschicht beeinträchtigt wird. Neben runden und polygonförmigen Profilen kommen jedoch bevorzugt Piktogramme zur Anwendung, die Werbe- oder Hinweischarakter haben können. Durch ihre Anwendung lassen sich beispielsweise die verschiedenen Abteilungen eines Kaufhauses oder Wege und Verkehrsflächen dauerhaft und einprägsam kennzeichnen.

Die Aussparungen sind einander mosaikartig zugeordnet und können im Zusammenhang Piktogramme, Buchstaben, Zahlen, Linienzüge und/oder der Information oder Erbauung dienende graphische Darstellungen zeigen. Die einzelne Aussparung hat nur eine geringe Ausdehnung von vorzugsweise 1 - 5 mm, und sie ist den benachbarten Aussparungen in einem ähnlich kleinen Abstand zugeordnet. Eine Auflösung des so gebildeten Musters ist daher bei normalem Sichtabstand und mit bloßem Auge regulär nicht möglich. Dafür erscheint das Muster außerordentlich brillant, was unter ästhetischen Gesichtspunkten von großem Vorteil ist.

Die in den Aussparungen sichtbare Farbe der Unterschicht dominiert in dem Maße, in dem der Überdeckungsgrad, bezogen auf die Gesamtfläche der Flächenbereiche, steigt. Es ist deshalb vorteilhaft, vor allem in bildlichen Darstellungen Aussparungen in gleichbleibendem Abstand und einer sich stetig und/oder sprunghaft ändernden Größe zu verwenden bzw. bei gleichbleibender Größe sprunghaft und/oder stetig variierte Abstände. Auch sprunghafte und/ oder stetige Veränderungen der Gestalt der Grundfläche der Aussparungen können diesem Zwecke dienen, beispiels weise der unmerkliche Übergang von einer quadratischen Form der Aussparung zu einer gestreckten Rechteckform. Eine Belebung des an sich zweifarbigen Bildes der Oberfläche des Fußbodenbelages durch Licht- und Schattenwirkungen ist hiervon die Folge.

Die Oberschicht hat durch die geringe Ausdehnung der Aussparungen eine gute Eigenstabilität, was die verzerrungsfreie Manipulation während der Verarbeitung sehr begünstigt.

Auch bei großformatigen Darstellungen sind deshalb den Gesatmeindruck der Oberfläche des fertigen Fußbodenbelages störende Veränderungen als Folge der Manipulation beim Einlegen der verschiedenen Schichten in das Pressenwerkzeug und/oder als Folge der beim Verpressen stattfindenden Fließvorgänge des Werkstoffes der Unterschicht nicht zu befürchten. Die durch die Flächenbereiche ausgedrückten Darstellungen können deshalb jede gewünschte Form und Gestalt haben, jeden beliebigen Flächenanteil des Fußbodenbelages überdecken und im Einzelsegment, beispielsweise einer Fliese, an jeder beliebigen Stelle angeordnet sein.

Eine größere Variationsbreite hinsichtlich der farblichen Musterungsmöglichkeiten ergibt sich, wenn vor dem Verpressen farblich abweichende Körper aus um- bzw. anvulkanisiertem Gummi in die Unterschicht bzw. in die Oberschicht eingebracht werden, was beispielsweise durch einfaches Aufstreuen und Einkalandrieren in die Oberfläche erfolgen kann. Die Körper werden dabei so deformiert, daß sich eine vollkommen glatte Oberfläche ergibt, in der die aneinandergren zenden Oberflächenzonen homogen ineinander übergehen. Die farbliche Gesamteindruck läßt sich durch eine entsprechende Maßnahme wesentlich beeinflussen.

Ober- und Unterschicht werden anschließend aufeinander gelegt, und in einem Formwerkzeug derart miteinander verpreßt, daß die Unterschicht die Aussparungen der Oberschicht vollständig ausgefüllt. Die Temperatursteuerung wird dabei so vorgenommen, daß sich die gewünschte gegenseitige Verbindung und Verfestigung der Werkstoffe beider Schichten ergibt.

Das bedeutet, daß eine einfache Beheizung auf Vulkanisationstemperatur genügt. Diese kann in Abhängigkeit vom jeweils eingesetzten Werkstoff in sehr weiten Grenzen variieren und beträgt bevorzugt 150 bis 190°C. Eine kontinuierliche Arbeitsweise mit einem Bandkalander ist ebenfalls möglich.

Die senkrecht gegeneinander gepreßten Platten des Formwerkzeuges können glatt und ebenflächig ausgebildet sein, was zur Erzeugung eines Fußbodenbelages führt, dessen Ober- und Unterseite vollkommen glatt und ebenflächig ist. Solche Bodengeläge zeichnen sich durch eine besonders große Widerstandfähigkeit gegenüber mechanischen Belastungen aus.

Durch Verwendung einer oberen Pressplatte mit einer reliefartigen Strukturierung läßt sich die Rutschsicherheit des erzeugten Fußbodenbelages verbessern, was häufig erwünscht bzw. notwendig ist, beispielsweise bei einer Verlegung im Naßbereich.

Durch eine entsprechend erzeugte Strukturierung der Unterseite läßt sich die Sicherheit der Verankerung nach der Verlegung verbessern. Wenn das hier gebildete Relief aus einer Vielzahl von dicht nebeneinanderlieg Säulen gebildet wird, ergibt sich außerdem eine Verbesserung der Trittelastizität und der Trittschalldämpfung bei Verwendung einer Unterschicht aus einem gummielastischen Werkstoff.

Nachfolgend wird der Gegenstand der vorliegenden Erfindung anhand eines Beispieles weiter verdeutlicht:

### Beispiel 1

Eine Gummimischung, bestehend aus der Rezeptur A wird in einem Innenmicher homogenisiert. Die Mischung wird anschließend auf einen Kalander gegeben und zu einer Folie mit einer Dicke von 0,5 bis 1 mm ausgewalzt. Die Folie wird aufgewickelt und anschließend in einen Bandkalander überführt, in dem sie bei einer Oberflächentemperatur von 180°C und einer Laufgeschwindigkeit von 80 m/h, d. h einer Verweilzeit von ca. 3 Minuten, vorvulkanisiert wird. Die Folie wird anschließend in zwei gleichbreite Bahnen geteilt und getrennt aufgewickelt.

In den Innenmischer werden die Komponenten der Rezeptur I eingegeben und nach vollständiger Homogenisierung der Mischung zu einer Folie mit einer Dicke von 1,5 bis 2 mm ausgewalzt.

Eine der beiden Folien der Zusammensetzung A wird in einem Rollenstanzwerkzeug mit sie ganz durchdringenden Aussparungen versehen. Diese sind zylindrisch begrenzt und auf geraden Linien angeordnet. Sie haben bei einem gleichbleibenden Abstand von 2 mm einen Durchmesser von 1,8 mm. Die Linien umfassen eine erste Linienschar aus parallel verlaufenden Linienzügen und eine zweite Linienschar, die die erste Linienschar unter einem rechten Winkel schneidet. Der Abstand der Linien beträgt 50 mm. Die Aussparungen bilden in ihrer Gesamtheit ein Mosaik, das an ein Kachelmuster erinnert.

Die Folie bildet im Sinne des vorgeschlagenen Verfahrens die Oberschicht. Sie ist derart eigenfest, daß sie ohne die Gefahr einer Beschädigung oder Verzerrung des aus Aussparungen gebildeten Musters manipuliert werden kann. Aussparungen geboldeten Musters manipuliert werden kann.

Die drei vorliegenden Folien werden anschließend so aufeinander geschichtet, daß die Folie der Zusammensetzung I zwischen den beiden anderen Folien der Zusammensetzung A zu liegen kommt und in einen beheizten Bandkalander überführt. Die mit den Durchbrechungen versehene Folie ist der polierten Kalanderwalze zugewandt. Diese hat bei einer Oberflächentemperatur von 180°C eine Laufgeschwindigkeit von 36 m/h, was einer Verweildauer des dreischichtigen Gebildes von 6 Minuten entspricht. Die drei Schichten werden während dieser Zeit vulkanisiert und untrennbar miteinander verbunden. Die Oberfläche zeichnet sich durch eine durchgehende, kontinuierliche Vulkanisationshaut aus, die lediglich farblich durch den in die Aussparungen eingepreßten Werkstoff der Unterschicht unterbrochen ist. Ein gleichwertiges Ergebnis läßt sich erzielen, wenn anstelle der polierten Kalanderwalze eine solche verwendet wird, die eine waffelartig strukturierte Oberfläche aufweist oder ein entsprechendes Pressenwerkzeug.

|  | A |  | I |  |
|---|---|---|---|---|
| SBR-Kautschuk | 15 | % | 11,8 | % |
| Hochstyrolharz (65 % Blockstyrol) | 2,4 | % | 5,6 | % |
| Kaolin | 60 | % | 59 | % |
| Kreide | 8,5 | % | 8,2 | % |
| Weichmacher | 1,7 | % | 3 | % |
| $TiO_2$ | 3,5 | % | | |
| Eisenoxidrot | | | 2,5 | % |
| Lithophone | 6,7 | % | 6,7 | % |
| ZnO | 0,7 | % | 0,7 | % |
| Stearinsäure | 0,35 | % | 0,35 | % |
| Triäthanolamin | 0,35 | % | 0,35 | % |
| Paraffin | 0,35 | % | 0,35 | % |
| Alterungsschutzmittel | 0,2 | % | 0,2 | % |
| 2-Mercaptobenzothiazol | 0,2 | % | 0,2 | % |
| Dibenzothiazyldisulfid | 0,2 | % | 0,2 | % |
| Schwefel | 0,85 | % | 0,85 | % |
|  | 100 | % | 100 | % |

Angaben in Prozent, bezogen auf das Gesamtgewicht der Mischung.

## Beispiel 2 (Vergleich)

Ein Vergleichsmuster der Folie aus der Mischung I wird entsprechend den Angaben aus dem Beispiel 1 gelocht und auf die Oberseite der anvulkanisierten Folie aus der Mischung A aufgelegt. Die Unterseite wird wiederum einer Folie aus der Mischung I abgedeckt. Die übrige Verfahrensweise entspricht der in Beispiel 1 geschilderten. Aufgrund der Viskositätsunterschiede bei 170°C ergeben sich keine sauberen Oberflächen, d.h. die schlechter fließende Mischung A füllt die durch Stanzen in der Oberschicht eingebrachten Öffnungen nicht aus, die Konturen der Aussparungen sind unsauber abgebildet.

## Patentansprüche

Verfahren zur Herstellung eines zwei übereinander angeordnete, kontrastfarbene Schichten aus Gummi aufweisenden Fußbodenbelages, bei dem die Schichten gemeinsam verpreßt und durch Vulkanisierung des sie bildenden Werkstoffes verbunden und verfestigt werden und bei dem die Oberschicht zur Freilegung der Unterschicht in den musterartig verteilten Flächenbereichen ganz entfernt wird, dadurch gekennzeichnet, daß der Werkstoff der Oberschicht vor dem Verpressen anvulkanisiert und in den genannten Flächenbereichen entfernt wird und daß das Verpressen so vorgenommen wird, daß der Werkstoff der Unterschicht die Flächenbereiche ganz ausfüllt.

**0 105 074**

**Claim**

A process for the manufacture of a floor covering having two contrasting-coloured layers of rubber arranged one on top of the other, in which the layers are press-moulded together and bonded and consolidated by vulcanization of the material forming them, and in which the upper layer is completely removed to expose the under layer in the surface areas distributed in the manner of a pattern, <u>characterized in that</u> the material of the upper layer is partially vulcanized before press-moulding and removed in the said surface areas, and in that the press moulding is performed in such a way that the material of the under layer completely fills the surface areas.

**Revendications**

Procédé de fabrication d'un revêtement de sol comportant deux couches de caoutchouc superposées et de couleurs contrastées, procédé dans lequel on presse les couches ensemble, puis on les lie et les consolide par vulcanisation de la matière première dont elles sont constituées, après quoi on enlève complètement la couche supérieure pour mettre à nu la couche inférieure dans les zones superficielles réparties sous forme d'un dessin, <u>caractérisé en ce que,</u> avant le pressage, la matière première de la couche supérieure est soumise à une approche de vulcanisation, tandis qu'elle est enlevée dans les zones superficielles précitées, <u>et en ce que</u> le pressage est effectué de telle sorte que la matière première de la couche inférieure vienne combler entièrement les zones superficielles.